# FASCICULE DE BREVET EUROPEEN

(11) **EP 1 223 087 B1**
(45) Date de publication et mention de la délivrance du brevet: **16.02.2005**
(21) Numéro de dépôt: 01130378.1
(22) Date de dépôt: 20.12.2001
(51) Int. Cl.: B60R 22/26

(54) **Brin boucle de ceinture de sécurité, notamment pour véhicule automobile**
Gurtschloss eines Sicherheitsgurtes, insbesondere für ein Kraftfahrzeug
Belt buckle of a seat belt, especially for a motor vehicle

(30) Priorité: 12.01.2001 FR 0100355
(43) Date de publication de la demande: 17.07.2002
(73) Titulaire: Peugeot Citroen Automobiles SA, 92200 Neuilly sur Seine (FR)
(72) Inventeur: Zych, Pascal, 70110 Melecey (FR)
(74) Mandataire: Poupon, Michel

(56) Documents cités:
- GB-A- 1 351 447
- US-A- 4 790 597
- US-A- 5 898 366

## Description

La présente invention concerne un brin boucle de ceinture de sécurité, notamment pour véhicule automobile comme définie par le préambule de la revendication 1, généralement connue de l'homme de l'art.

Elle se rapporte plus particulièrement à une fixation de fermoir de ceinture de sécurité, désignée couramment brin boucle, pour siège avant d'un véhicule automobile.

Dans les architectures actuelles des véhicules automobiles, il s'avère difficile de déterminer dans un véhicule une position de la boucle de ceinture ou fermoir répondant à deux situations de vie primordiales. Ces deux situations de vie distinctes sont l'accès au verrouillage de la ceinture d'une part et les performances de retenue d'autre part.

Ainsi pour permettre un verrouillage aisé de la ceinture, l'accès à la boucle nécessite de positionner celle-ci au dessus d'un point fictif de référence du mannequin correspondant au point d'articulation de la hanche. Par ailleurs, afin d'optimiser la retenue de l'occupant et notamment pour éviter le déplacement de son bassin lors d'un choc, il est nécessaire de positionner le brin boucle de ceinture en dessous du point d'articulation de la hanche.

On comprend que ces deux positions du brin boucle respectivement de verrouillage et de retenue sont techniquement incompatibles et contradictoires. De plus, lorsque la boucle a été placée dans une position efficace de retenue, l'espace restreint entre la console et le siège est trop contraignant pour permettre un accès efficace à la boucle lors du verrouillage de la ceinture.

Pour résoudre ce problème, on connaît dans l'état de la technique antérieure, l'utilisation d'un brin boucle pré-tensionneur utilisant un brin boucle sur câble permettant un accès satisfaisant lors du verrouillage de la ceinture ainsi que, lors d'un choc, la pré-tension déplaçant par un moyen pyrotechnique la boucle vers le bas pour la positionner en dessous du point de référence et éviter le basculement du bassin.

Une telle solution s'avère satisfaisante; toutefois elle présente l'inconvénient de prévoir un cheminement du faisceau d'alimentation électrique nécessaire au moyen pyrotechnique et de devoir tenir compte de la cinématique du siège et le débattement de ses systèmes de réglage.

Ainsi, le but de l'invention est de proposer un brin boucle pour ceinture de sécurité qui permette de résoudre tout ou partie des inconvénients précités.

A cet effet, la présente invention a pour objet un brin boucle de ceinture de sécurité notamment pour siège avant d'un véhicule automobile, ancrée, par son extrémité inférieure, sur la partie mobile d'un système de guidage longitudinal du siège, et portant à son extrémité supérieure un fermoir de ceinture, apte à recevoir un pêne solidaire de la ceinture de sécurité, caractérisé en ce que le fermoir du brin boucle est monté coulissant verticalement dans un fourreau solidaire de ladite partie mobile de manière à prendre deux positions stables, respectivement une position escamotée correspondant au verrouillage du pêne dans le fermoir dans laquelle le fermoir se positionne en dessous d'un point fictif de référence assimilable à l'articulation de la hanche d'un passager assis sur le siège et une position déployée correspondant au déverrouillage du pêne du fermoir dans laquelle le fermoir se positionne au-dessus dudit point de référence.

Selon une caractéristique avantageuse de la présente invention, le fermoir du brin boucle est solidaire d'un feuillard métallique guidé en translation dans le fourreau.

Selon une autre caractéristique avantageuse, le feuillard est pourvu d'une ouverture oblongue disposée verticalement, traversée par un axe assurant d'une part le guidage du feuillard dans son mouvement de translation et d'autre part la butée haute de celui-ci en position déployée.

Selon encore une caractéristique avantageuse, le brin boucle comporte un doigt de verrouillage du feuillard en position escamotée afin d'assurer l'immobilisation de celui-ci dans cette position. Ce doigt de verrouillage est constitué par exemple d'une goupille transversale par rapport au fermoir, mobile sous l'action d'un électroaimant solidaire du fourreau et destinée à s'engager au moins dans un orifice réalisé sur le feuillard lorsque celui-ci est en position escamotée.

Selon une caractéristique avantageuse, l'électroaimant est relié à un contacteur de détection du verrouillage du pêne disposé à l'intérieur du fermoir, transmettant une information de déplacement du doigt de verrouillage.

Selon une autre caractéristique avantageuse, le feuillard est pourvu à l'extrémité opposée au fermoir d'un rebord sur lequel est en appui un ressort de rappel en position déployée disposé dans le fond du fourreau.

Un autre objet de la présente invention conceme un siège avant de véhicule automobile pourvu d'un système de guidage longitudinal, et d'un brin boucle de ceinture de sécurité ancré par son extrémité inférieure sur le système de guidage et portant un fermoir de ceinture à son extrémité supérieure, apte à recevoir un pêne solidaire de la ceinture de sécurité, caractérisé en ce que le brin boucle est conforme à l'une quelconque des caractéristiques précédentes.

Les caractéristiques de l'invention mentionnées ci-dessus, ainsi que d'autres, apparaîtront plus clairement à la lecture de la description suivante d'un exemple de réalisation, en se référant aux dessins annexés sur lesquels :
- la figure 1 est une vue en perspective d'un brin boucle selon la présente invention en position de verrouillage,
- les figures 2 et 3 sont des vues en coupe transversale du brin boucle selon l'invention respectivement en position déverrouillée et en position verrouillée.

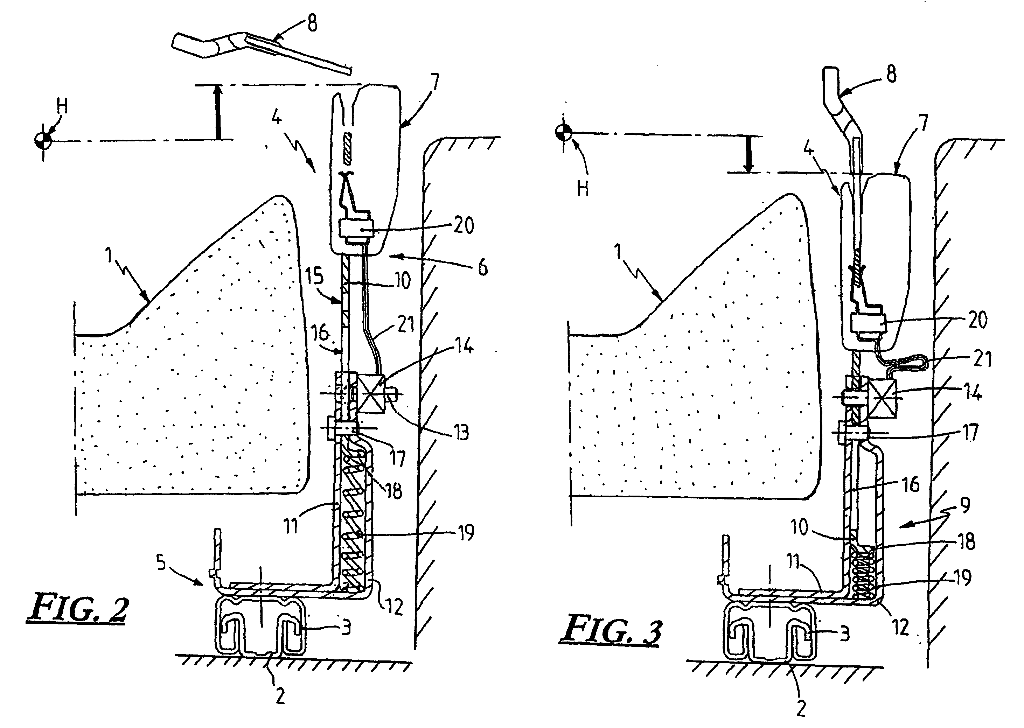

On a représenté sur les figures 2 et 3, l'assise 1 d'un siège de véhicule automobile présentant de façon connue, un système de guidage longitudinal du type glissière constitué d'une partie fixe 2 et d'une partie mobile 3, ainsi qu'une fixation de fermoir 4 de ceinture de sécurité, désigné également brin boucle. Cette fixation de fermoir 4 est ancrée, par son extrémité inférieure 5, sur la partie mobile 3 de la glissière de siège du guidage longitudinal, et porte un fermoir 7 de ceinture à son extrémité supérieure 6, apte à recevoir un pêne 8 solidaire de la ceinture de sécurité.

Selon la présente invention, le fermoir 7 du brin boucle est monté coulissant verticalement dans un fourreau 9 solidaire de la partie mobile 3 de la glissière de manière à prendre deux positions stables respectivement une position escamotée correspondant au verrouillage du pêne 8 dans le fermoir 7 et une position déployée correspondant au déverrouillage du pêne 8 du fermoir 7.

Selon un mode de réalisation préférentiel, le fermoir 7 du brin boucle 4 est solidaire d'un feuillard 10 métallique guidé en translation dans le fourreau 9. On notera que le terme feuillard utilisé dans la description désigne une lame de fer plate et étroite. Ce fourreau 9 est constitué avantageusement de deux équerres 11 et 12 superposées et solidaires l'une de l'autre comme schématisé sur les figures. L'une 12 des équerres comportant des rebords latéraux afin de définir avec l'autre équerre un logement pour le feuillard 10.

Ce feuillard 10 est pourvu d'une ouverture oblongue 16 disposée verticalement, traversée par un axe 17 assurant d'une part le guidage du feuillard 10 dans son mouvement de translation et d'autre part la butée haute de celui-ci en position déployée.

Le brin boucle 4 comporte en outre un doigt de verrouillage 13 du feuillard 10 en position escamotée afin d'assurer l'immobilisation de celui-ci dans cette position.

Pour ce faire, ce doigt de verrouillage 13 est constitué d'une goupille transversale par rapport au fermoir, mobile sous l'action d'un électroaimant 14 solidaire de l'une 12 des parois du fourreau 9 et destinée à traverser un orifice 15 réalisé dans le feuillard 10 lorsque celui-ci est en position basse ou escamotée.

Cet électroaimant 14 est relié à un contacteur de détection 20 du verrouillage du pêne 8 disposé à l'intérieur du fermoir 7.

Le feuillard 10 est pourvu à l'extrémité opposée au fermoir 7 d'un rebord sur lequel est en appui un ressort de rappel 19, du type ressort à spirale, en position déployée disposé dans le fond du fourreau 9.

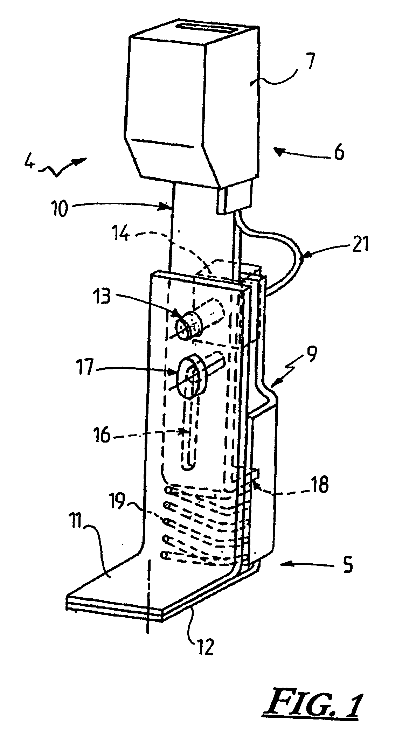

Le fonctionnement du brin boucle selon l'invention ressort déjà de la description qui en a été faite ci-dessus et va être maintenant explicité en relation avec les figures 1 à 3.

Lors du verrouillage de la ceinture, l'effort d'engagement du pêne 8 dans le fermoir 7 permet de faire descendre le fermoir, en dessous du point fictif de référence H, en comprimant le ressort 19 placé sous le feuillard 10. Au verrouillage du pêne 8, le contacteur de détection 20 transmet une information via un fil conducteur 21 à l'électroaimant 14 fixé sur le fourreau 9, qui déplace une goupille 13 destinée à verrouiller le feuillard 10 en position basse ou escamotée. On notera que cette goupille 13 est dimensionnée de façon à assurer la retenue du brin boucle 4 quand s'exerce une force de traction sur la ceinture provoquée par un accident.

Lors du déverrouillage du pêne 8 du fermoir 4, le contacteur de détection 20 transmet via le fil conducteur 21 une information à l'électroaimant 14 afin de dégager la goupille 13 de verrouillage et libérer ainsi le feuillard 10 en position haute ou déployée sous la force de rappel du ressort 19. La position haute est déterminée par la mise en contact du fond du trou oblong 16 avec l'axe 17 assurant la butée.

On comprend à la lecture de la description ci-dessus que le brin boucle de la présente invention permet d'optimiser la retenue de l'occupant sans perturber l'accès au verrouillage et d'assurer une mise en oeuvre et un changement d'état automatique au verrouillage et déverrouillage de la ceinture. On notera que la position de retenue optimale du passager en cas de choc est en place dès l'ancrage de la ceinture contrairement aux solutions classiques du type pré-tensionneur. En outre, ce brin boucle est relativement simple à réaliser.

Bien que l'invention ait été décrite en liaison avec un mode de réalisation particulier elle comprend tous les équivalents techniques des moyens décrits.

## Revendications

1. Brin boucle de ceinture de sécurité notamment pour siège avant d'un véhicule automobile, ancrée, par son extrémité inférieure (5), sur la partie mobile (3) d'un système de guidage longitudinal du siège, et portant à son extrémité supérieure (6) un fermoir (7) de ceinture, apte à recevoir un pêne (8) solidaire de la ceinture de sécurité, **caractérisé en ce que** le fermoir (7) du brin boucle (4) est monté coulissant verticalement dans un fourreau (9) solidaire de ladite partie mobile (3) de manière à prendre deux positions stables respectivement une position escamotée correspondant au verrouillage du pêne (8) dans le fermoir (7) dans laquelle le fermoir se positionne en dessous d'un point fictif de référence (H) assimilable à l'articulation de la hanche d'un passager assis sur le siège et une position déployée correspondant au déverrouillage du pêne (8) du fermoir (7) dans laquelle le fermoir (7) se positionne au-dessus dudit point de référence (H).

2. Brin boucle de ceinture de sécurité selon la revendication 1, **caractérisé en ce que** le fermoir (7) du brin boucle (4) est solidaire d'un feuillard (10) métallique guidé en translation dans le fourreau (9).

3. Brin boucle de ceinture de sécurité selon la revendication 2, **caractérisé en ce que** le feuillard (10) est pourvu d'une ouverture oblongue (16) disposée verticalement, traversée par un axe (17) assurant d'une part le guidage du feuillard (10) dans son mouvement de translation et d'autre part la butée haute de celui-ci en position déployée.

4. Brin boucle de ceinture de sécurité selon la revendication 2 ou 3, **caractérisé en ce que** le brin boucle (4) comporte en outre un doigt de verrouillage (13) du feuillard (10) en position escamotée afin d'assurer l'immobilisation de celui-ci dans cette position.

5. Brin boucle de ceinture de sécurité selon la revendication 4, **caractérisé en ce que** ce doigt de verrouillage (13) est constitué d'une goupille transversale par rapport au fermoir (7), mobile sous l'action d'un électroaimant (14) solidaire du fourreau (9) et destiné à s'engager au moins dans un orifice (15) réalisé sur le feuillard (10) lorsque celui-ci est en position escamotée.

6. Brin boucle de ceinture de sécurité selon la revendication 5, **caractérisé en ce que** l'électroaimant (14) est relié à un contacteur de détection (20) du verrouillage du pêne (8) disposé à l'intérieur du fermoir (7), transmettant une information de déplacement du doigt de verrouillage (13).

7. Brin boucle de ceinture de sécurité selon l'une des revendications 2 à 6, **caractérisé en ce que** le feuillard (10) est pourvu à l'extrémité opposée au fermoir (7) d'un rebord sur lequel est en appui un ressort de rappel (19) en position déployée disposé dans le fond du fourreau (9).

8. Siège avant de véhicule automobile pourvu d'un système de guidage longitudinal, et d'un brin boucle (4) de ceinture de sécurité ancré par son extrémité inférieure sur ledit système de guidage (2, 3) et portant un fermoir (7) de ceinture à son extrémité supérieure, apte à recevoir un pêne (8) solidaire de la ceinture de sécurité, **caractérisé en ce que** le brin boucle (4) est conforme à l'une quelconque des revendications précédentes.

## Claims

1. Seat belt buckle end, more especially for the front seat of a motor vehicle, which seat belt is anchored, by its lower end (5), on the displaceable portion (3) of a longitudinal guidance system for the seat, and carries, at its upper end (6), a belt clasp (7), capable of receiving a latch (8) which is integral with the seat belt, **characterised in that** the clasp (7) of the buckle end (4) is mounted in a vertically sliding manner in a case (9) integral with said displaceable portion (3) so as to take up two stable positions, respectively a retracted position corresponding to the locking of the latch (8) in the clasp (7), in which position the clasp is positioned below an imaginary reference point (H) compatible with the articulation of the hips of a passenger sitting on the seat, and a deployed position corresponding to the unlocking of the latch (8) from the clasp (7), in which position the clasp (7) is positioned above said reference point (H).

2. Seat belt buckle end according to claim 1, **characterised in that** the clasp (7) of the buckle end (4) is integral with a metallic strap (10), which is displaceably guided in the case (9).

3. Seat belt buckle end according to claim 2, **characterised in that** the strap (10) is provided with an oblong aperture (16), which is disposed vertically and traversed by a spindle (17), said spindle ensuring, on the one hand, the guidance of the strap (10) in its displacement movement and, on the other hand, the high abutment of said strap in the deployed position.

4. Seat belt buckle end according to claim 2 or 3, **characterised in that** the buckle end (4) also includes a locking pawl (13) for locking the strap (10) in the retracted position, in order to ensure the immobilisation of said strap in this position.

5. Seat belt buckle end according to claim 4, **characterised in that** this locking pawl (13) is made up of a pin, which is transverse relative to the clasp (7), displaceable by the action of an electromagnet (14) integral with the case (9) and intended to engage at least in one orifice (15) provided on the strap (10) when said strap is in the retracted position.

6. Seat belt buckle end according to claim 5, **characterised in that** the electromagnet (14) is connected to a detection contactor (20) for detecting the locking of the latch (8), which contactor is disposed within the clasp (7) and transmits data concerning the displacement of the locking pawl (13).

7. Seat belt buckle end according to one of claims 2 to 6, **characterised in that** the strap (10) is provided, at the end opposite the clasp (7), with an edge on which is supported a return spring (19) in the deployed position, disposed in the base of the case (9).

8. Front seat of a motor vehicle, provided with a system of longitudinal guidance and with a seat belt buckle end (4), which is anchored, by its lower end, on said guidance system (2, 3) and carries a belt clasp (7) at its upper end, capable of receiving a latch (8) integral with the seat belt, **characterised in that** the buckle end (4) conforms to any of the preceding claims.

## Patentansprüche

1. Gurtschloss für einen Sicherheitsgurt insbesondere für einen Vordersitz eines Kraftfahrzeugs, das mit seinem unteren Ende (5) an dem beweglichen Teil (3) eines Längsführungssystemes des Sitzes angebracht ist und an seinem oberen Ende (6) eine Schließe (7) des Gurtes aufweist, die dazu eingerichtet ist, einen mit dem Sicherheitsgurt fest verbunden ausgebildeten Riegel (8) aufzunehmen, **dadurch gekennzeichnet, dass** die Schließe (7) des Gurtschlosses (4) in einer mit dem beweglichen Teil (3) fest verbundenen Hülse (9) so vertikal verschiebbar angebracht ist, dass sie zwei stabile Stellungen einnimmt, nämlich eine eingezogene Stellung, die der Verriegelung des Riegels (8) in der Schließe (7) entspricht, in der sich die Schließe unterhalb eines fiktiven Referenzpunktes (H) anordnet, der mit dem Hüftgelenk eines auf dem Sitz sitzenden Fahrgastes zusammenfällt, und eine erhabene Stellung, die der Entriegelung des Riegels (8) der Schließe (7) entspricht, in der die Schließe (7) oberhalb des Referenzpunktes (H) angeordnet ist.

2. Gurtschloss für einen Sicherheitsgurt nach Anspruch 1, **dadurch gekennzeichnet, dass** die Schließe (7) des Gurtschlosses (4) fest mit einem verschiebbar innerhalb der Hülse (9) geführten Metallband (10) verbunden ist.

3. Gurtschloss für einen Sicherheitsgurt nach Anspruch 2, **dadurch gekennzeichnet, dass** das Band (10) mit einer vertikal ausgerichteten länglichen Ausnehmung (16) ausgebildet ist, durch die eine Achse (17) durchtritt, die zum einen die Führung des Bandes (10) in seiner translatorischen Bewegung und zum anderen dessen oberen Anschlag in der erhabenen Stellung sicherstellt.

4. Gurtschloss für einen Sicherheitsgurt nach Anspruch 2 oder 3, **dadurch gekennzeichnet, dass** das Gurtschloss (4) weiterhin einen Verriegelungsfinger (13) für das Band (10) in der eingezogenen Stellung aufweist, um dessen Fixierung in dieser Stellung sicherzustellen.

5. Gurtschloss für einen Sicherheitsgurt nach Anspruch 4, **dadurch gekennzeichnet, dass** der Verriegelungsfinger (13) durch einen in Bezug auf die Schließe (7) quer ausgerichteten Zapfen gebildet ist, der unter dem Einfluss eines fest mit der Hülse (9) verbundenen Elektromagneten (14) beweglich und dazu eingerichtet ist, wenigstens mit einer in dem Band (10) ausgebildeten Ausnehmung (15) in Eingriff zu kommen, wenn dieses in der eingezogenen Stellung ist.

6. Gurtschloss für einen Sicherheitsgurt nach Anspruch 5, **dadurch gekennzeichnet, dass** der Elektromagnet (14) mit einem im Inneren der Schließe (7) angeordneten Kontakt (20) zum Detektieren der Verriegelung des Riegels (8) verbunden ist, der eine Information bezüglich der Bewegung des Verriegelungsfingers (13) überträgt.

7. Gurtschloss für einen Sicherheitsgurt nach einem der Ansprüche 2 bis 6, **dadurch gekennzeichnet, dass** das Band (10) an dem der Schließe (7) gegenüberliegenden Ende mit einem Kragen ausgebildet ist, an dem in der erhabenen Stellung eine im Bodenbereich der Hülse (9) angeordnete Rückzugsfeder (19) anliegt.

8. Vordersitz eines Kraftfahrzeugs, der mit einem Längsführungssystem und mit einem Gurtschloss (4) für einen Sicherheitsgurt ausgestattet ist, das mit seinem unteren Ende an dem Führungssystem (2, 3) angebracht ist und an seinem oberen Ende eine Gurtschließe (7) trägt, die dazu eingerichtet ist, einen mit dem Sicherheitsgurt fest verbundenen Riegel (8) aufzunehmen, **dadurch gekennzeichnet, dass** das Gurtschloss (4) gemäß einem der vorangehenden Ansprüche ausgebildet ist.
